Europäisches Patentamt

European Patent Office

Office européen des brevets

(11) Veröffentlichungsnummer: **0 319 076 B1**

(12) **EUROPÄISCHE PATENTSCHRIFT**

(45) Veröffentlichungstag der Patentschrift: **17.06.92**

(51) Int. Cl.⁵: **B05B 15/12**, B03C 3/16

(21) Anmeldenummer: **88202626.3**

(22) Anmeldetag: **23.11.88**

(54) Verfahren zur Reinigung des Abwassers von Farb-und Lackspritzkabinen.

(30) Priorität: **01.12.87 DE 3740663**

(43) Veröffentlichungstag der Anmeldung:
**07.06.89 Patentblatt 89/23**

(45) Bekanntmachung des Hinweises auf die
Patenterteilung:
**17.06.92 Patentblatt 92/25**

(84) Benannte Vertragsstaaten:
**DE ES FR GB IT**

(56) Entgegenhaltungen:
**DE-A- 3 705 634**

(73) Patentinhaber: **METALLGESELLSCHAFT AG**
**Reuterweg 14 Postfach 3724**
**W-6000 Frankfurt/M.1(DE)**

(72) Erfinder: **Mayer-Schwinning, Gernot**
**In den Hessengärten 8**
**W-6380 Bad Homburg(DE)**
Erfinder: **Böning, Günter**
**Hinter den Obergärten 1**
**W-6000 Frankfurt am Main 60(DE)**

## Beschreibung

Die Erfindung bezieht sich auf ein Verfahren zur Reinigung von Abwasser, das beim Waschen der Abluft von Farb- oder Lackspritzkabinen anfällt. In einer Farb- oder Lackspritzkabine werden bis zu 50 % der versprühten Farben und Lacke in der Luft suspendiert, die in der Spritzkabine enthalten ist bzw. die ihr zugeführt wird. Die Abluft einer Spritzkabine enthält daher sowohl Lösungsmitteltröpfchen und -dämpfe als auch Farbstoffpartikel. Während die in der Spritzkabinenabluft enthaltenen Lösungsmittel durch ein Adsorptionsmittel abgetrennt und anschließend durch Desorption zurückgewonnen werden, müssen die Farbstoffpartikel vor der Lösungsmittelabtrennung durch eine Wäsche aus der Abluft abgeschieden werden, da sie sich anderenfalls auf dem Adsorptionsmittel niederschlagen, dort verkleben und damit die Lösungsmittelabtrennung verhindern würden.

Es ist bereits bekannt, daß die Abluft der Farb- und Lackspitzkabinen abgesaugt und in einen Wäscher geführt wird, wo eine Wäsche mit Wasser erfolgt. Das Waschwasser nimmt die teilweise außerordentlich klebrigen Farbstoffpartikel sowie Teile des Lösungsmittels auf und muß daher gereinigt werden. Dies geschieht dadurch, daß es mit Flokkungsmitteln (z.B. Bentonit) behandelt wird, wobei die Farbstoffpartikel und Teile des Lösungsmittels im Schlamm eingebunden werden. Der Schlamm wird durch Sedimentation oder Filtration abgetrennt und nach einer Teilentwässerung auf einer Deponie abgelagert, während das Wasser erneut in den Waschkreislauf gelangt. Dieses bekannte Verfahren hat insbesondere den Nachteil, daß große Schlammengen deponiert werden müssen und daß die aus dem Abwasser abgeschiedenen Farbstoffpartikel nicht in den Lackierungsprozeß zurückgeführt werden können. Beispielsweise fallen in einer Lackieranlage, die aus 30 Lackierstraßen besteht und in der während 24 Stunden 12 240 Autokarosserien lackiert werden können, innerhalb dieses Zeitraums 180 000 m³ Abwasser an, die 12,2 t Farbstoffpartikel enthalten. Zur Abscheidung der Farbstoffpartikel werden innerhalb von 24 Stunden 288 t Flokkungsmittel benötigt.

Der Erfindung liegt daher die Aufgabe zugrunde, ein Verfahren zur Reinigung des Abwassers von Farb- und Lackspritzkabinen zu schaffen, das keinen Abwasserschlamm produziert, der auf eine Deponie verbracht werden muß, und das ein Recycling der im Abwasser vorhandenen Farbstoffpartikel ermöglicht.

Die der Erfindung zugrundeliegende Aufgabe wird dadurch gelöst, daß das Abwasser mit einer Temperatur von 10 bis 80°C senkrecht von oben nach unten in ein elektrisches Feld eingesprüht wird, welches zwischen einer Sprüh- und einer Niederschlagselektrode vorliegt, eine Spannung von 10 000 bis 80 000 Volt und eine Feldstärke von 0,5 bis 10 kV/cm aufweist sowie als Dielektrikum Luft enthält, und daß das von der Niederschlagselektrode abfließende Abwasser in einen Abscheider gelangt, wo die Farbstoffpartikel und Lösungsmittel durch Dichtetrennung aus dem Wasser abgeschieden werden. Es hat sich in überraschender Weise gezeigt, daß die in das elektrische Feld eingesprühte wässrige Lacksuspension durch den Einfluß der elektrischen Feldstärke so beeinflußt wird, daß eine Entklebung der Farbstoffpartikel eintritt und daß eine Abscheidung der Farbstoffpartikel durch Dichtetrennung möglich ist.

Obwohl aus der EP-A-0 047 432 ein Verfahren zur mehrstufigen Reinigung der Abluft einer Farb- oder Lackspritzanlage bekannt ist, bei dem ein Teil der Lackpartikel mit einem Feuchtreinigungsgerät aus der Abluft entfernt und diese dann in einer weiteren Reinigungsstufe gefiltert wird, worauf zumindest ein Teil der gefilterten Abluft in einer Spritzkabine als Zuluft wieder verwendet wird und bei dem ein Teil der Lackpartikel zunächst durch einen Wäscher aus der Abluft ausgewaschen und der Feuchtigkeitsgehalt der Abluft soweit erhöht wird, daß die Abluft im wesentlichen mit Wasserdampf gesättigt ist, worauf die Abluft dann unter Aufrechterhaltung ihres Feuchtigkeitsgehalts durch einen Naßelektroabscheider geführt wird, dessen Abscheidungsflächen zum Abführen des Lackpartikelniederschlags mit einer Spülflüssigkeit abgespült werden, die zum Abscheiden zumindest eines Teils der Lackpartikel wieder aufbereitet und dann in den Naßelektroabscheider zurückgeführt wird, konnte der Fachmann nicht erwarten, daß die im Abwasser suspendierten Farbstoffpartikel durch die Wirkung eines elektrischen Feldes so beeinflußt werden, daß sie entkleben und problemlos aus der wässrigen Suspension abgetrennt werden können, denn eine wässrige Suspension hat andere Eigenschaften als eine Gasphase.

Auch das in der nicht vorveröffentlichten deutschen Patentanmeldung P 37 05 634.4 vorgeschlagene Verfahren zur Reinigung von Abluft aus Farb- oder Lackspritzkabinen, bei dem das benutzte Waschwasser im Kreislauf geführt wird und bei dem die Abluft der Spritzkabine ohne vorherige anderweitige Behandlung mit Waschwasser bedüst und dann direkt einem Naßelektrofilter zugeführt wird, konnte den Fachmann nicht zur Schaffung des erfindungsgemäßen Verfahrens veranlassen. Es hat sich nämlich gezeigt, daß die Reinigungsleistung des in der nicht vorveröffentlichten deutschen Patentanmeldung P 37 05 634.4 vorgeschlagenen Verfahrens verbesserungsbedürftig ist, was nicht durch eine Erhöhung der Waschwassermenge erreicht werden kann, da es im elektrischen Feld zu Überschlägen kommt, wenn die Waschwassermenge zu groß wird. Im Hinblick auf die Arbeitsergebnisse, die mit dem Verfahren nach der nicht vorveröffentlichten deutschen Patentanmeldung P 37 05 634.4 erzielt worden sind, war es daher außerordentlich überraschend, daß beim Einsprühen des mit Farbstoffpartikeln und Lösungsmitteln verunreinigten Abwassers einer Spritzkabine in ein elektrisches Feld eine hohe Reinigungsleistung erreicht werden konnte.

Das erfindungsgemäße Verfahren kann besonders erfolgreich durchgeführt werden, wenn das Abwasser im elektrischen Feld eine Verweilzeit von 0,1 bis 10 sec hat, wenn in das elektrische Feld 10 bis 200 l Abwasser/m$^2$ Niederschlagselektrodenfläche und pro Stunde eingesprüht werden und wenn die Tröpfchen des in das elektrische Feld eingesprühten Abwassers einen Durchmesser von 0,02 bis 2 mm haben. Bei diesen Verfahrensbedingungen kommt es nicht zu Stromüberschlägen bzw. zu Störungen des elektrischen Feldes, so daß gleichbleibende Trennbedingungen erhalten bleiben.

Nach der Erfindung ist ferner vorgesehen, daß das Abwasser durch eine Einstoffdüse mit einem Druck von 2 bis 50 bar in das elektrische Feld eingesprüht wird oder daß das Abwasser mit Luft durch eine Zweistoffdüse in das elektrische Feld eingesprüht wird, wobei Luft und Abwasser einen Druck von 1 bis 10 bar haben und das Volumen-Verhältnis Abwasser zu Luft 1 : 10 bis 1 : 1 beträgt. Bei diesen Bedingungen wird eine optimale Tropfengröße und gleichmäßige Verteilung des Abwassers im elektrischen Feld erreicht.

In weiterer Ausgestaltung der Erfindung ist vorgesehen, daß das von der Niederschlagselektrode abfließende Abwasser im Abscheider eine Verweilzeit von 2 bis 120 Minuten hat, denn während dieser Zeit schwimmen die Farbstoffpartikel auf oder sedimentieren und können problemlos vom Wasser abgetrennt werden. In vielen Fällen ist es zweckmäßig, wenn die Abtrennung der Farbstoffpartikel und der Lösungsmittel durch Flotation beschleunigt wird. Bei dieser Arbeitsweise erfolgt die Abtrennung der Farbstoffpartikel dadurch, daß in das im elektrischen Feld behandelte Abwasser Luft eingeblasen wird und daß die Farbstoffpartikel zusammen mit Lösungsmittelanteilen sehr schnell aufschwimmen.

Der Gegenstand der Erfindung wird nachfolgend anhand eines Ausführungsbeispiels näher erläutert.

In ein Elektrofilter, das einen Eintrittsquerschnitt von 1 m$^2$ hatte und in dem mehrere Sprühelektroden und als Platten ausgebildete Niederschlagselektroden angeordnet waren, wurden pro Stunde 300 bis 3 000 l Abwasser eingesprüht. Die Niederschlagsfläche betrug bei einem Gassenabstand von 300 mm und einer aktiven Höhe des elektrischen Feldes von 2,5 m ca. 20 m$^2$, was einer Abwassermenge von 15 bis 150 l pro Stunde und pro m$^2$ Niederschlagselektrodenfläche entspricht. Die im Abwasser enthaltenen Farbstoffpartikel wurden an der Niederschlagselektrode abgeschieden und flossen in ein Sedimentationsgefäß, wo die Farbstoffpartikel aufschwammen und nahezu quantitativ aus dem Abwasser abgetrennt werden konnten. Das gereinigte Abwasser konnte erneut in den Abluftwäscher zurückgeführt werden, während die Farbstoffpartikel, die Lösungsmittelanteile enthielten, in die Lackherstellung zurückgeführt wurden. Das Abwasser enthielt 1 bis 100 g Feststoff (Trockensubstanz)/l und war mit Lösungsmittelresten verunreinigt. Das gereinigte Abwasser enthielt immer weniger als 0,1 g Feststoff (Trockensubstanz)/l; es war geruchlos und frei von Lösungsmitteln.

**Patentansprüche**

1. Verfahren zur Reinigung von Abwasser, das beim Waschen der Abluft von Farb- oder Lackspritzkabinen anfällt, wobei das Abwasser mit einer Temperatur von 10 bis 80°C senkrecht von oben nach unten in ein elektrisches Feld eingesprüht wird, welches zwischen einer Sprüh- und einer Niederschlagselektrode vorliegt, eine Spannung von 10 000 bis 80 000 Volt und eine Feldstärke von 0,5 bis 10 kV/cm aufweist sowie als Dielektrikum Luft enthält, und das von der Niederschlagselektrode abfließende Abwasser in einen Abscheider gelangt, wo die Farbstoffpartikel und Lösungsmittel durch Dichtetrennung aus dem Wasser abgeschieden werden.

2. Verfahren nach Anspruch 1, dadurch gekennzeichnet, daß das Abwasser im elektrischen Feld eine Verweilzeit von 0,1 bis 10 sec hat.

3. Verfahren nach den Ansprüchen 1 bis 2, dadurch gekennzeichnet, daß in das elektrische Feld 10 bis 200 l Abwasser pro m$^2$ Niederschlagselektrodenfläche und pro Stunde eingesprüht werden.

4. Verfahren nach den Ansprüchen 1 bis 3, dadurch gekennzeichnet, daß die Tröpfchen des in das elektrische Feld eingesprühten Abwassers einen Durchmesser von 0,02 bis 2 mm haben.

5. Verfahren nach den Ansprüchen 1 bis 4, dadurch gekennzeichnet, daß das Abwasser durch eine Einstoffdüse mit einem Druck von 2 bis 50 bar in das elektrische Feld eingesprüht wird.

6. Verfahren nach den Ansprüchen 1 bis 4, dadurch gekennzeichnet, daß das Abwasser mit Luft gemischt und durch eine Zweistoffdüse in das elektrische Feld eingesprüht wird, wobei Abwasser und Luft einen Druck von 1 bis 10 bar aufweisen und wobei das Volumen-Verhältnis von Abwasser zu Luft 1 : 10 bis 1 : 1 beträgt.

7. Verfahren nach den Ansprüchen 1 bis 6, dadurch gekennzeichnet, daß das von der Niederschlagselektrode abfließende Abwasser im Abscheider eine Verweilzeit von 2 bis 120 Minuten hat.

8. Verfahren nach den Ansprüchen 1 bis 7, dadurch gekennzeichnet, daß die Abtrennung der Farbstoffpartikel und der Lösungsmittel durch Flotation beschleunigt wird.

## Claims

1. A process for purifying waste water which is produced during washing of the exhaust air of paint-spray booths, in which the waste water is sprayed vertically from top to bottom at a temperature of 10 to 80°C into an electric field present between a corona discharge electrode and a collecting electrode, has a voltage of 10,000 to 80,000 volts and a field intensity of 0.5 to 10 kV/cm and also contains air as dielectric, and the waste water flowing away from the collecting electrode passes into a separator wherein the solids particles and solvent are separated out from the water by separation by density.

2. A process according to Claim 1, characterised in that the waste water has a dwell time of 0.1 to 10 seconds in the electric field.

3. A process according to Claims 1 to 2, characterised in that 10 to 200 l waste water are sprayed into the electric field per m$^2$ collecting electrode surface area and per hour.

4. A process according to Claims 1 to 3, characterised in that the droplets of waste water sprayed into the electric field have a diameter of 0.02 to 2 mm.

5. A process according to Claims 1 to 4, characterised in that the waste water is sprayed into the electric field through a unary nozzle at a pressure of 2 to 50 bar.

6. A process according to Claims 1 to 4, characterised in that the waste water is mixed with air and sprayed into the electric field through a binary nozzle, the waste water and air being at a pressure of 1 to 10 bar and the volume ratio of waste water to air being 1 : 10 to 1 : 1.

7. A process according to Claims 1 to 6, characterised in that the water flowing away from the collecting electrode has a dwell time of 2 to 120 minutes in the separator.

8. A process according to Claims 1 to 7, characterised in that the separation of the solids particles and the solvent is accelerated by flotation.

## Revendications

1. Procédé d'épuration de l'eau usée qui se forme lors du lavage de l'eau qui sort de cabines de pulvérisation de peintures ou vernis, l'eau usée étant pulvérisée à une température de 10 à 80°C verticalement de haut en bas dans un champ électrique présent entre une électrode d'émission et une électrode réceptrice ayant une tension de 10 000 à 80 000 volts et une intensité de champ de 0,5 à 10 kV/cm et comportant de l'air comme diélectrique, l'eau usée, s'écoulant de l'électrode réceptrice, parvenant dans un séparateur où les particules de peinture et le solvant sont séparés de l'eau par séparation en fonction de la densité.

2. Procédé suivant la revendication 1, caractérisé en ce que l'eau usée a une durée de séjour, dans le champ électrique, de 0,1 à 10 secondes.

3. Procédé suivant la revendication 1 ou 2, caractérisé en ce qu'il consiste à pulvériser dans le champ électrique de 10 à 200 l d'eau usée par m$^2$ de surface d'électrode réceptrice et à l'heure.

4. Procédé suivant l'une des revendications 1 à 3, caractérisé en ce que les gouttelettes de l'eau usée pulvérisée dans le champ électrique ont un diamètre de 0,02 à 2 mm.

5. Procédé suivant l'une des revendications 1 à 4, caractérisé en ce qu'il consiste à pulvériser l'eau usée dans le champ électrique par une buse pour un seul constituant sous une pression de 2 à 50 bar.

6. Procédé suivant l'une des revendications 1 à 4, caractérisé en ce qu'il consiste à mélanger l'eau usée à de l'air et à la pulvériser dans le champ électrique par une buse pour deux constituants, l'eau usée et l'air ayant une pression de 1 à 10 bar et le rapport en volume de l'eau usée à l'air étant compris entre 1:10 et 1:1.

7. Procédé suivant l'une des revendications 1 à 6, caractérisé en ce que l'eau usée s'écoulant de l'électrode réceptrice a une durée de séjour dans le séparateur de 2 à 120 minutes.

8. Procédé suivant l'une des revendications 1 à 7, caractérisé en ce qu'il consiste à accélérer la séparation des particules de peinture et du solvant par flottation.